Europäisches Patentamt

European Patent Office

Office européen des brevets

(11) Publication number: **0 350 335**
**A2**

# EUROPEAN PATENT APPLICATION

(21) Application number: 89306980.7

(22) Date of filing: 10.07.89

(51) Int. Cl.5: **A 01 K 15/00**

(30) Priority: **08.07.88 GB 8816305**

(43) Date of publication of application:
**10.01.90 Bulletin 90/02**

(84) Designated Contracting States: **DE FR GB**

(71) Applicant: **West, Charles Henry**
**Barttridge Bridge Newton Tracey**
**Barnstaple North Devon, EX31 3PN (GB)**

**Thorne, Derek**
**West Panson St. Giles in the Heath**
**Launceston Cornwall (GB)**

(72) Inventor: **West, Charles Henry**
**Barttridge Bridge Newton Tracey**
**Barnstaple North Devon, EX31 3PN (GB)**

**Thorne, Derek**
**West Panson St. Giles in the Heath**
**Launceston Cornwall (GB)**

(74) Representative: **Harrison, Ivor Stanley et al**
**Withers & Rogers 4 Dyer's Building Holborn**
**London EC1N 2JT (GB)**

(54) **Livestock crush.**

(57) A crush for livestock comprises side frame members between which an animal to be held may be driven, and neck-retaining means, the neck retaining means being movable between an open position and a closed neck-retaining position, in which the neck-retaining means may be pre-set in an intermediate partially-closed position and includes an operating mechanism whereby the said means are automatically caused to assume the closed position as the animal enters the crush. Preferably the neck-retaining means, which may be gates which have profiled edges to define a neck-receiving aperture therebetween, are arranged to close in a progressive or step-wise manner to increase the restraining force on a restless animal.

FIG 1(a)

## Description

## LIVESTOCK CRUSH

This invention relates to crushes for livestock, of the type which are able to hold an animal temporarily by the neck.

Livestock crushes, generally for cattle, are known and in their simplest embodiment comprise side frames between which an animal is driven and its neck is caught in a manually-operated collar or yoke attached to the side frames. However, considerable dexterity is required, particularly when dealing with stubborn animals, in order successfully to capture the neck of the animal without either the animal or the operative sustaining injury. In an attempt to overcome this problem, automatic crushes have been developed which have as their object to provide a mechanism which automatically closes a collar or other holding means around the neck of the animal by the action of the animal itself tripping a catch mechanism. However, hitherto such crushes have either tended to constrict the animal's windpipe and/or are awkward to use in that the animal is required to move backwards in order to leave the crush.

It is an object of the present invention to provide an automatic livestock crush which grips the animal securely and yet safely and which does not require the animal to move backwards for release purposes.

According to the invention, a crush for livestock comprises side frame members between which an animal to be held may be driven, and neck-retaining means, the neck retaining means being movable between an open position and a closed neck-retaining position, in which the neck-retaining means may be pre-set in an intermediate partially-closed position and includes an operating mechanism whereby the said means are automatically caused to assume the closed position as the animal enters the crush.

Preferably, the neck-retaining means comprises gates hingeably mounted on the side frame members for movement between an open position and a closed position, the outer longitudinal edges of the gates being shaped to define together an animal neck-retaining aperture when in the closed position, the gates being manually settable in the intermediate position in readiness to move automatically to the closed position on being struck by an animal entering the crush between the side frame members and manually openable to allow the animal to leave the crush.

In the inventive arrangement, the animal may be driven into the crush from one end and, once held by the neck-retaining means, is comfortably yet securely retained for as long as is necessary. When the animal is to be released, the neck-retaining means are returned to the open position, thus allowing the animal to walk forwards between the side frame members and away from the crush.

Preferably the operating mechanism includes a ratchet or other arrangement whereby the gates move progressively or step-wise from the intermediate position to the fully-closed position, thereby progressively increasing the restraining force on the animal if the animal is restless when initially caught in the crush.

The operating mechanism is preferably constituted by biassed gate operating arms and a latch arrangement, in which the gates are retained by the latch arrangement against the biassing force, the animal automatically releasing the latch on striking the gates so that the gates are urged towards the closed position by the bias pressure. Conveniently, the gate operating arms are biassed, by means of springs. However, the arrangement may be such that the gates or other neck-retaining means are directly biassed to the closed position.

Embodiments of the invention will now be described by way of example with reference to the accompanying drawings, of which:

Figures 1(a) and (b) are respectively a side elevation and plan of a cattle crush with the gates in the open position;

Figures 2(a) and (b) are respectively similar views to Figure 1 with the gates half-way between the open and set positions;

Figures 3(a) and (b) are respectively similar views to Figure 1 with the gates in the set position;

Figures 4(a) and (b) are respectively similar views to Figure 1 with the gates in the closed position; and

Figures 5(a) and (b) are respectively exploded and assembled views of components of the ratchet part of the latch mechanism of the crush of Figure 1, the relative positions of the parts shown in Figure 5(b) representing the unloaded (gates fully open or fully closed) condition.

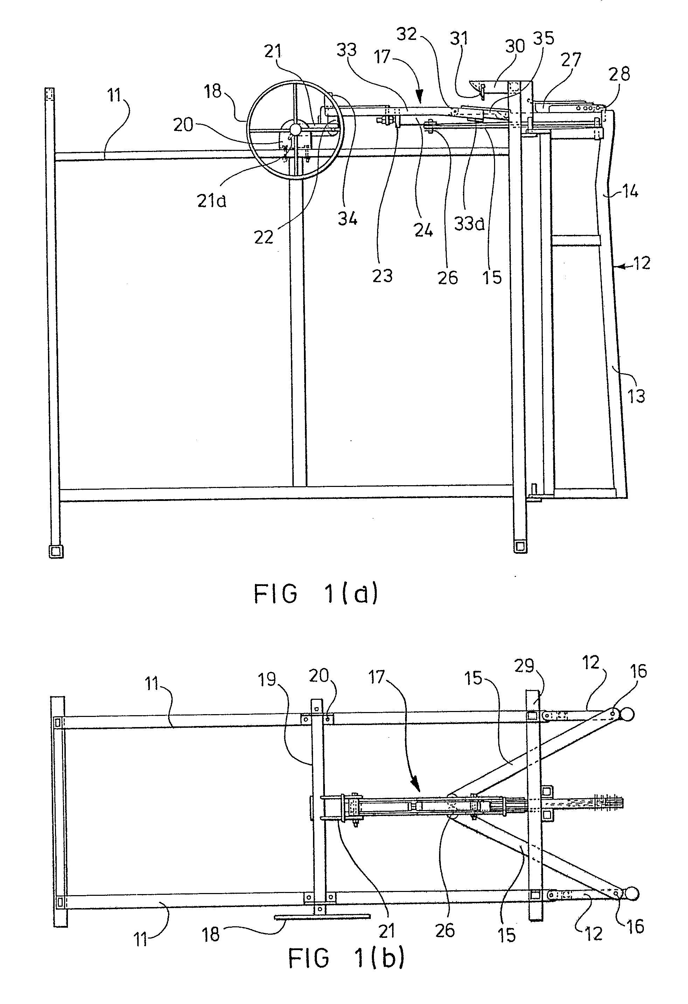

Referring firstly to Figure 1, a cattle crush consists of side frame assemblies 11, the frames only shown for the sake of clarity. In practice, the frames are at least partly blocked in by panel members. Each of a pair of gates 12 is hingeably mounted at one end of each side assembly. Again, only the frames are shown; they are generally blocked in by panel members. The outer longitudinal side members 13 of the gates are profiled inwardly to form a slight trough towards the hinge or inner side members, the trough being at its maximum at 14, so that when the gates are closed the outer edge members define between them an aperture which can retain an animal's neck between the shoulders and the skull without constricting the wind-pipe.

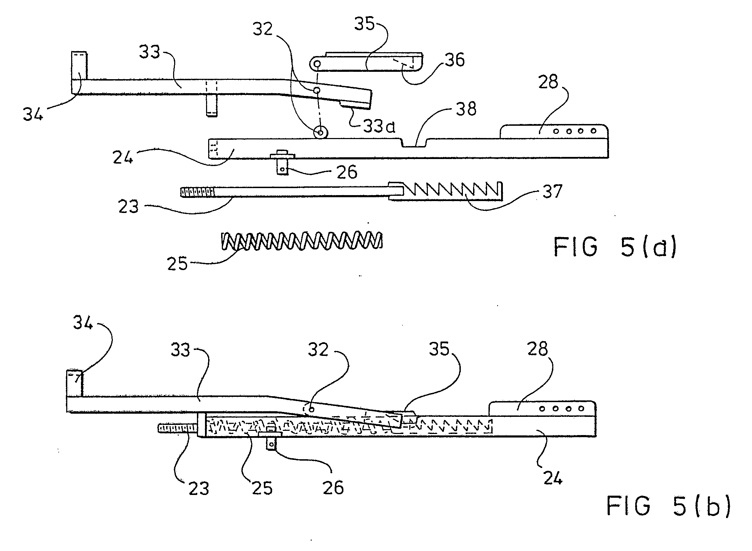

Movement of the gates is controlled by operating arms 15 pivotally connected between the outer ends 16 of the top frame members of the gates and a spring-loadable latch mechanism 17. The latch mechanism is centrally mounted over the front half of the crush and is manually set and released by operating wheel 18 by means of which spindle 19, mounted in brackets 20 secured to the upper longitudinal members of the side frame assemblies, is rotatable in either direction. A radial bracket 21 and a plate 21a are attached to the spindle, the bracket and plate subtending between them an angle of between approximately 90 and 120°. The outer end of the bracket is pivotally attached to one end of a link member 22 the other end of which is secured to a rod 23. The rod 23 is slidably carried in a box-sectioned member 24 and is operatively connected thereto by a compression spring 25 (see Figure 5). The member 24 carries pivot pins 26 to which are connected the gate operating arms 15. The distal end (with respect to the rod 23) of the box-sectioned member pivotally supports an abutment member 27; the abutment member may be pivotally connected through any one of a number of holes formed in an upstanding spine element 28 for longitudinal adjustment purposes.

The front vertical members of the side frame assemblies are bridged by a lateral member 29 to the centre of which is attached a rearwardly-facing bracket 30 from which depends a lug 31.

The upper side of the box-section member 24 carries a journal which is attached at 32 towards one end of a parallel-sided girder assembly 33, the spacing between the girders being greater than the width of member 24 and link member 22. The other ends of the girders are connected by a raised bridge 34. One end of a pawl member 35 is hingeably attached, also at 32, between the girders of assembly 33, the member 35 including a ramp formation 36; the formation 36 acts as a pawl which engages with ratchet 37 formed at the distal end of rod 23, for which purpose the upper wall and parts of the side walls of box-section member 24 are cut away at 38 (see Figure 5). The assembly 33 preferably remains substantially level, as shown in Figure 1, irrespective of the angle of member 24, and lower internal flanges 33a are provided to prevent pawl member 35 from pivoting downwardly beyond the position shown in Figure 1.

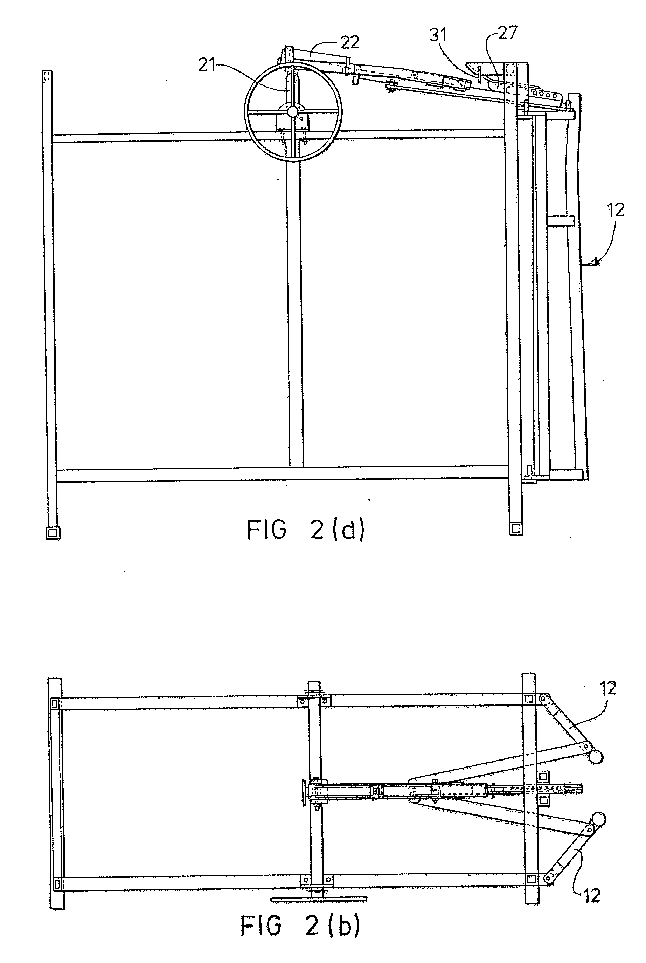

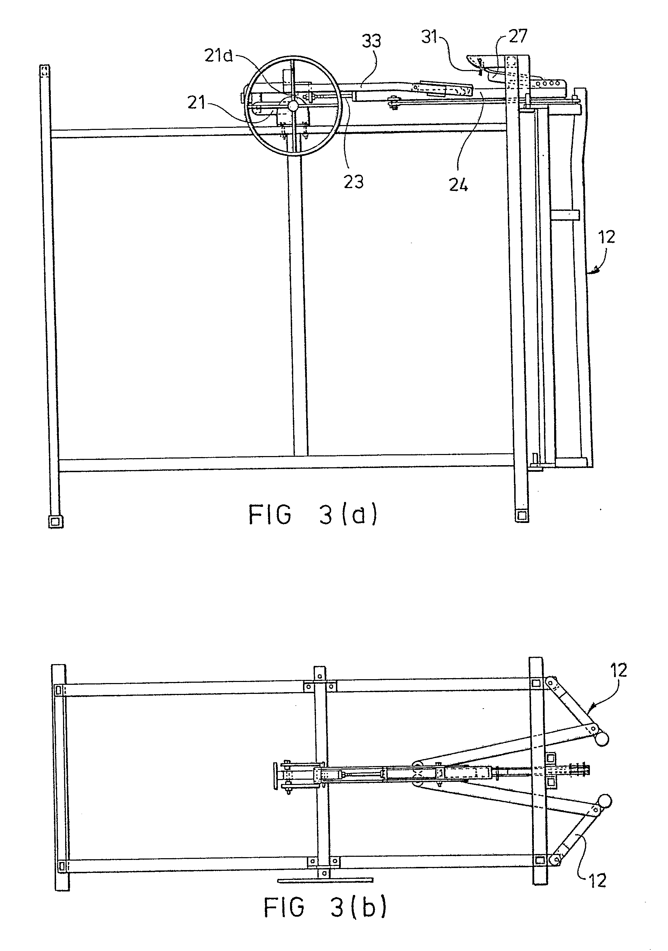

In use, the crush is initially set in the open condition, as viewed in Figure 1. In this condition, the wheel 18 is turned to its maximum clockwise extent, the radial bracket 21 is at the "three o'clock" position, the box-section member 24 is at its extreme right-hand limit of travel and the gate operating arms 15 have moved the gates 12 to their fully-open position. In order to set the crush to receive an animal, the wheel 18 is rotated in an anti-clockwise direction so that, initially, the radial bracket 21 moves the link member 22 upwards and at an angle to the left with the result that, in the condition as shown in Figure 2 with the radial bracket at the "12 o'clock" position, the entire latch mechanism is raised and drawn to the left, thereby partially closing the gates 12 and causing the tongue of the abutment member 27 to approach the lug 31. However, the girder assembly 33 remains substantially level, so that the pawl 36 is disengaged from the ratchet. This condition continues to obtain preferably throughout the travel arc of bracket 21 of at least 45° on either side of the "12 o'clock" position. On further anti-clockwise rotation of the wheel 18 so that the radial bracket 21 approaches the "9 o'clock" position, as shown in Figure 3, the tongue of the abutment member 27 engages lug 31 and thus the box-section member 24 is prevented from moving further to the left, thus retaining the gates partially closed. The further movement of the bracket 21 therefore causes the link member 22 to withdraw the rod 23 from within the box-section member 24 against the force of the compression spring 25, the disengagement of the pawl and ratchet permitting this movement. In this condition, the compression spring is applying a potential closing force to the gates which are however prevented from closing by the engagement of the abutment member 27 with lug 31, which are maintained in engagement by the force of the compression spring. Also in attaining this condition, the row of ratchet teeth 37 has passed beneath and is immediately to the left of the pawl 36 and, in the condition represented by Figure 3, the member 24 is once again lowered with the result that the pawl and ratchet are re-engaged. Also in this condition, plate 21 engages the underside of assembly 33 thereby preventing its anticlockwise rotation and increasing the extent to which the pawl bears on the ratchet.

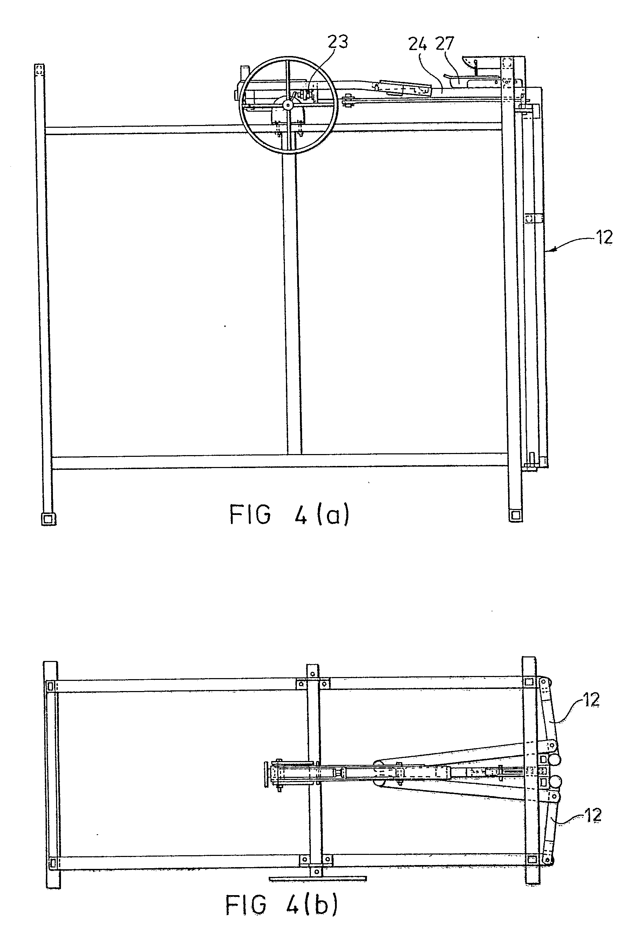

With the crush thus set in the loaded condition, an animal is led or driven between the side frames so that its head enters the gap between the partially-closed gates until the shoulders of the animal engage the longitudinal edge members of the gates. The gates are thus moved slightly towards the open position, thereby releasing the tongue of the abutment member 27 from continued engagement with lug 31 so that the gates are immediately subject to the closing force exerted by the compression spring. The gates therefore move towards the closed position until the pawl 36 overrides the first of the ratchet teeth 37; in this condition the gates exert a tighter constraining force on the animal than in the Figure 3 condition. The animal cannot move further forward and any attempt at rearward movement will cause the ratchet to move further beneath the pawl, thus progressively closing the gates and further increasing the constraining force on the animal until, ultimately, the condition of Figure 4 is attained with the gates fully closed.

When it is wished to release the animal, the wheel 18 is turned in a clockwise direction to re-open the gates to the Figure 1 condition and allow the animal to walk free in a forwards direction.

A livestock crush for cattle would have typical dimensions of approximately 2m in length, 2m in height and 0.7m in width.

## Claims

1. A crush for livestock comprising side frame members between which an animal to be held may be driven, and neck-retaining means, the neck retaining means being movable between an open position and a closed neck-retaining position, in which the neck-retaining means may be pre-set in an intermediate partially-closed position and includes an operating mechanism whereby the said means are automatically caused to assume the closed position as the animal enters the crush.

2. A crush according to Claim 1, in which the neck-retaining means comprises gates hingeably mounted on the side frame members for movement between an open position and a closed position, the outer longitudinal edges of the gates being shaped to define together an animal neck-retaining aperture when in the closed position, the gates being manually settable in the intermediate position in readiness to move automatically to the closed position on being struck by an animal entering the crush between the side frame members and manually openable to allow the animal to leave the crush.

3. A crush according to Claim 1 or Claim 2, in which the operating mechanism closes the neck-retaining means in a progressive or step-wise fashion from the intermediate to the fully closed position.

4. A crush according to Claim 3, in which the progressive or step-wise function of the operating mechanism comprises a ratchet arrangement.

5. A crush according to any preceding claim, in which the operating mechanism comprises biassed operating arms for the neck-retaining means and a latch, the neck-retaining means being retained by the latch against the biassing force, the animal to be held automatically releasing the latch on striking the neck-retaining means to urge the said neck-retaining means towards the closed position.

FIG 1(d)

FIG 1(b)

EP 0 350 335 A2

FIG 2 (d)

FIG 2 (b)

FIG 3(d)

FIG 3(b)

FIG 4 (a)

FIG 4 (b)

FIG 5(a)

FIG 5(b)

EP 0 350 335 A2